# EUROPEAN PATENT APPLICATION

(11) **EP 1 394 675 A2**
(43) Date of publication of application: **03.03.2004**
(21) Application number: 03253220.2
(22) Date of filing: 23.05.2003
(51) Int. Cl.: G06F 9/44

(54) **Method call acceleration in virtual machines**

(30) Priority: 22.08.2002 US 405266 P
(71) Applicant: MATSUSHITA ELECTRIC INDUSTRIAL CO., LTD., Kadoma-shi, Osaka 571-8501 (JP)
(72) Inventor: Debbabi, Mourad, Quebec H3E 1B4 (CA); Tawbi, Nadia, Sillery, Quebec G1S 3R9 (CA); Zhioua, Sami, Montreal Nord H1G 6H5 (CA); Erhioui, Mourad, Saint Laurent H4 1N9 (CA); Ketari Lamia, Montreal Nord H1G 6H5 (CA); Yahyaoui Hamdi, Saint Laurent H4N 1V4 (CA)
(74) Representative: Atkinson, Ralph

(57) **Abstract**

A computer based system accelerates code execution by speeding up method calls. A virtual machine includes a loader, interpreter and a thread manager. The loader constructing a hash-table using method signatures, and the interpreter searching the hash-table for locating methods. The interpreter using a method call cache having a pointer to a receiver for accelerating code execution. The thread manager using a depth level for accelerating locking state transitions.

## Description

### CROSS-REFERENCE TO RELATED APPLICATIONS

This application claims the benefit of U.S. Provisional Application No. 60/405,266, filed on August 22, 2002. The disclosure of the above application is incorporated herein by reference.

### FIELD OF THE INVENTION

The present invention relates to improving the speed of code execution and more particularly to accelerating the method calling mechanism in virtual machines operating in an object oriented environment like JAVA.

### BACKGROUND OF THE INVENTION

Object-oriented languages support inheritance and polymorphism to allow the development of flexible and reusable software. A typical object oriented program includes a set of classes. Each one of such classes can define a set of data members. Further, each class can include a set of methods that operate on the set of data members.

Inheritance, allows a class to "inherit" or derive the capabilities of a parent class. Hence, due to inheritance a given method may be common to the parent and child class. When such a common method is invoked, the execution mechanism has to determine whether the called method is operating on an object of either the parent or child class. Methods operating on objects are distinguished using method signatures that are typically composed from method name; number, type and order of arguments; return type; and the associated class of the object.

The type of a given object would usually be determined at run-time. This approach of determining the type of an object at run-time is termed as "dynamic binding". In this context, the selection of the appropriate method to be executed is based on a lookup mechanism, which means that the actual method to be executed after an invocation is determined dynamically based on the type of the method's receiver, the class hierarchy and the method inheritance or overloading schema. A typical lookup mechanism is described next.

The lookup mechanism determines the actual method to be executed when an invocation occurs. If a class implements a method that has the same signature as the called one, the found method will be executed. Otherwise, the parent classes will be checked recursively until the searched method is found. If no method is found, an error is signaled (*MsgNotUnderstood*). This operation occurs too frequently and is very expensive in terms of execution time and other resources. Hence, there is a need to speedup up the lookup mechanism.

Static techniques pre-compute a part of the lookup, and dynamic techniques use a cache of the results of previous lookup, thus avoiding other lookups. The principal dynamic binding algorithm is called the Dispatch Table Search (DTS). The DTS is a good method in terms of space cost, but the search penalty associated with the DTS makes the mechanism too slow. There is a need to reduce the overheads associated with the DTS. Many techniques have been proposed to reduce the overhead associated with DTS: static techniques which pre-compute a part of the lookup and dynamic techniques which cache the results of previous lookup, thus avoiding other lookups. The above referred techniques are described next.

A technique called Selector Table Indexing (STI) is a static method to accelerate the lookup mechanism. The STI technique is briefly described next. Given a class hierarchy of *C* classes and *S* selectors, a two-dimensional array of *C* * *S* entries is built. Classes and selectors are given consecutive numbers on each axis and the array is filled by pre-computing the lookup for each class and selector. An array entry contains a reference to the corresponding method or to an error routine. These tables are computed for a complete system.

ST1 technique delivers fast and constant time lookup. But the main drawback of STI is that space requirements are huge for a typical system having limited computing resources, for example, an embedded system. Many dispatch table compression techniques like, selector coloring, row displacement, etc., have been proposed to reduce the required space overhead. However, implementing such techniques places an undesirable burden on the limited computing resource environments like embedded systems. Further drawback of this technique is that the compiled code is very sensitive to changes in the class hierarchy. The two-dimensional array built by STI is fixed at compilation time. But for languages like Java, the set of classes could change dynamically. STI cannot handle such a situation since it cannot change the array dynamically.

Synchronisation techniques improve functioning of threading models used for executing multi-threaded applications. The synchronization technique used in conventional embedded JAVA virtual machines (especially those based on the Kilobyte Virtual Machines) associate to an object one of four states: (1) Unlocked, (2)Simple locked, (3) Extend locked, or (4) Associated to a monitor. Therefore, there is a need for synchronization techniques that are not associated with any particular locking state.

Hence, there is a need for a set of techniques that have low overhead requirements in terms of computing resources processor/execution time, memory and method searching or lookups. Such techniques should be effective even in situations where the receiver object changes frequently. Further, there is a need for a mechanism that accelerates code execution in virtual machines operating in limited resource computing environments like embedded systems.

### SUMMARY OF THE INVENTION

A computer based system accelerates the code execution by speeding up method calls. A virtual machine includes a loader, interpreter, thread manager and other modules and/or components. The loader constructs a hash-table using method signatures. The interpreter uses the constructed hash-table to accelerate the process of searching methods. The interpreter constructs and uses a method call cache having a pointer to a receiver to accelerate code execution. The cache provides modified guard conditions allowing faster cache operation leading to better execution speed. The thread manager uses a depth level for accelerating locking state transitions. The depth level indicates the simple locking and extended locking state, and thus eliminates the need for a separate simple locking state. Lesser number of locking states results in faster locking state transitions leading to faster code execution. The present invention can be implemented in any virtual machine environment in general, for example, JAVA virtual machines (JVM) and Kilobyte Virtual Machines (KVM) environments. In particular, the present invention can be implemented in embedded systems that have relatively limited computing resources.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a block diagram of a virtual machine in an embodiment of the invention;

Figure 2A shows an exemplary class hierarchy;

Figure 2B shows a method hash-table used in the process of lookup acceleration;

Figure 3 shows an exemplary method hash-table construction procedure;

Figure 4 describes an exemplary hash lookup procedure for searching a method in the hash-table;

Figure 6 shows an cache entry that includes a link to the receiver;

Figure 7 shows a first automation that represents a known threading model;

Figure 8 shows an optimized automation for accelerating multithreaded applications;

Figure 9 is an exemplary class hierarchy 76 used to illustrate improvements in the calling of inherited methods;

Figure 10 shows a bar-chart comparing method call times in an embodiment of the present invention; and

Figure 11 shows a pie-chart showing the acceleration/speedup rates in an embodiment of the present invention.

### DETAILED DESCRIPTION OF THE PREFERRED EMBODIMENTS

The following description of the preferred embodiment(s) is merely exemplary in nature and is in no way intended to limit the invention, its application, or uses.

An object oriented ("OO") program is composed of classes that encapsulate data members and methods that operate on such data members. Thus, a method in an OO program is a part of a given class. Objects of a previously declared/defined class can be instantiated. Each individual instance object of the given class type holds the data members declared in the given class declaration/definition. Typically, methods that are part of the given class type operate on the data members of the instantiated object.

An example illustrates a typical arrangement in an OO program. An exemplary OO program can have two classes named Class A and Class B, where Class B inherits or is derived from the Class A. Class A can define a method m, and due to inheritance, Class B will also have method m as its part. Objects of Class A type will have method m as their part, and so will objects of Class B type because of inheritance. Method signatures are used to distinguish methods as described next.

OO environments typically use method signatures that are formed using the class name, method name, parameters and return type to distinguish any two apparently similar methods. When an execution engine encounters an invocation of the method m on a given object, it uses the invoked method's signature to locate the definition of the method in method tables. This search for method definition is a time intensive task. The present invention minimizes the time required for method lookup and execution, while making minimal demands on the computing resources of any given environment

OO languages, for example JAVA, use a frequent dynamic dispatch mechanism to search for the definition of an invoked method. A method can be defined in more than one class. The search for the appropriate method definition is performed dynamically. This induces a significant execution time overhead. Generally, known static and dynamic techniques are not adequate for embedded platforms, like embedded JAVA, that operate under relatively severe resource constraints. In particular, such techniques are memory intensive, which is an undesirable characteristic for a typical embedded system having limited memory resources.

The present invention involves dynamic, flexible and efficient techniques for accelerating method call mechanism in OO environments. For illustration purposes, the method call acceleration mechanism is discussed in the context of a JAVA based virtual machine environment in an embedded systems application. Those skilled in the art will appreciate that a JAVA based embedded system is used only as an illustration for clarification purposes and the same is non-limiting. The present invention is operable and/or applicable in any object oriented environment. The acceleration techniques of the present invention span multiple aspects of the method call process, for example, lookup, caching and synchronized methods. A virtual machine is discussed next as a platform for applying the techniques of the invention in an embodiment of the present invention.

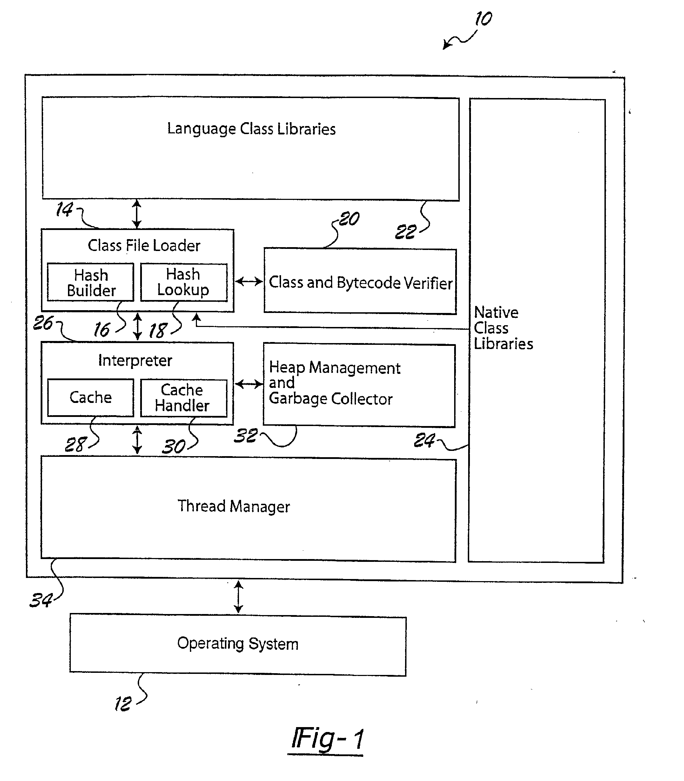

Figure 1 is a block diagram of a virtual machine 10 in an embodiment of the invention. The virtual machine 10 operates in close coordination with an operating system 12. A loader 14 loads the code to be executed into the virtual machine 10. Loader 14 includes hash management modules such as a hash builder 16 and a hash lookup 18, A verifier 20 checks the loaded classes and code for any possible errors. Loader 14 also loads any routines and/or classes from the language class libraries 18 and the native class libraries 24.

An interpreter 26 interprets and executes the code that was loaded by the loader 14. A cache 28 and an cache handler 30 are part of the interpreter 26 and are used to cache method calls. A heap management and garbage collector module 32 is used by the interpreter 26 for creating and destroying objects on the heap. Interpreter 26 employs a thread manager 34 to control the threading operations of the code being executed. Thread manager 34 performs locking and unlocking operations on the objects as various threads compete to access objects during the code execution. Further, the thread manager 34 also manages thread switching.

The above description of the virtual machine 10 relates to a generic virtual machine. A particular illustration of such a generic virtual machine 10 is a JAVA virtual machine (JVM). As a further illustration, a reference is made to a KVM (Kilobyte Virtual Machine). A KVM is typically used in embedded system applications that require a small footprint JVM. In either a KVM or a JVM, the loader 14 operates as a class file loader that loads the system and user defined classes. Further, the loader 14 builds the constant pool and class file structures and it interacts with the class and code verifier 20, which in the present illustration will verify the type safety of the loaded bytecodes. Interpreter 26 operates to interpret the bytecodes of a loaded class file. Thread manager 34 manages the application threads. Those skilled in the art will appreciate that the above descriptions of JVM and KVM are provided as illustrations that can aid in understanding the invention and the same are not limiting. Acceleration of method lookups is described next.

Figure 2A shows an exemplary class hierarchy 36. Class A 38 includes a method 'm'. Class B 40 is a child class of the parent Class A 38. Class B 40 includes methods m, m1 and m2. Class B 40 inherits method m from the Class A 38. A hash-table based lookup for this exemplary class hierarchy 36 is described next.

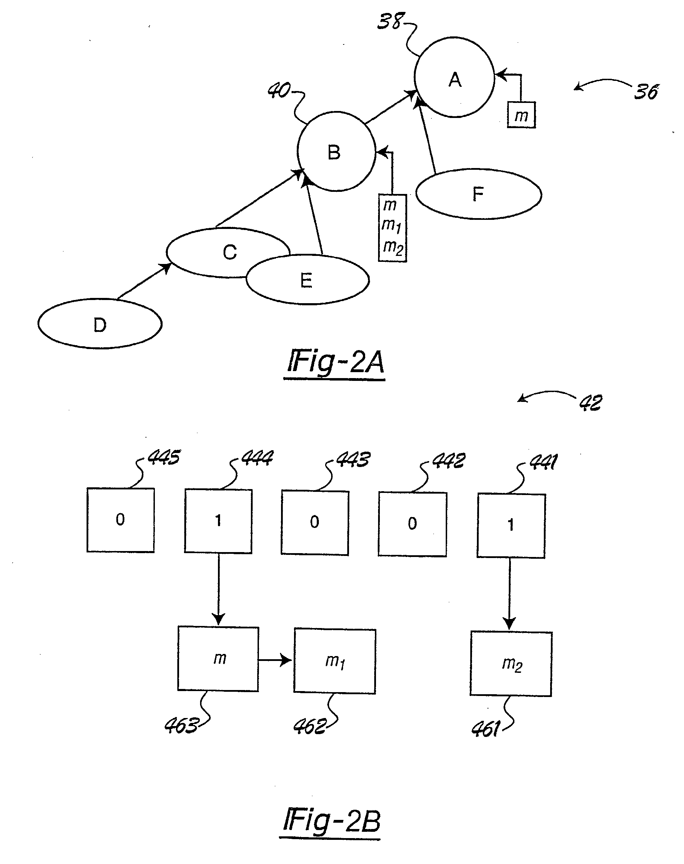

Figure 2B shows a method hash-table 42 used in the process of lookup acceleration. The loader 14 (see Figure 1) of the virtual machine builds a hash-table 42 for each virtual method table of the above described class hierarchy. The method table lookup is accelerated by a direct access technique like hashing. This is achieved by using an appropriate hashing technique and an efficient hashing function:

Method signature (not shown) can be constructed in multiple ways. For example, a method signature can be constructed using name of the method and the number and types of its formal parameters. Each index of the hash-table 42 corresponds to a result of applying a hash function to the method signature. The size of the hash-table 42 should be carefully chosen so as to have a low footprint while minimizing the collisions between method signatures to obtain a more efficient and flexible lookup mechanism. Efficiency is achieved because of direct access to the method tables provided through a hash-based access. Flexibility is attained because we can tune the size of the hash-table 42 in order to have the best ratio for speedup versus footprint.

During the loading process of a class, the hash builder 16 builds a hash method table. A hash is computed from the method signature. Each entry in the hash-table 42 is made of two components. The first component is a flag indicating whether the class contains a method with such a definition. In the present illustration, first components 44₁-44₅ are shown. The presence of flag '1' in the first components 44₁ and 44₄ indicates that links to method definitions are available for such methods whose method signature hashes on to hash index for first components 44₁ and 44₄.

The second component is a pointer to the method definition. In the case of a collision, this second component is a pointer to a list of method definitions. Here, second component 46₁ is a single method definition for the method m2, since no other method signature hashes to the first component 44₁'s hash position. But the second component for the hash position of the first component 44₄ is a collision list, because two methods signatures, for methods m and m1 respectively, hash onto the same first position 44₄. Hence, a collision list for method definitions of methods m and m₁ is shown as second components 46₂ and 46₃ respectively.

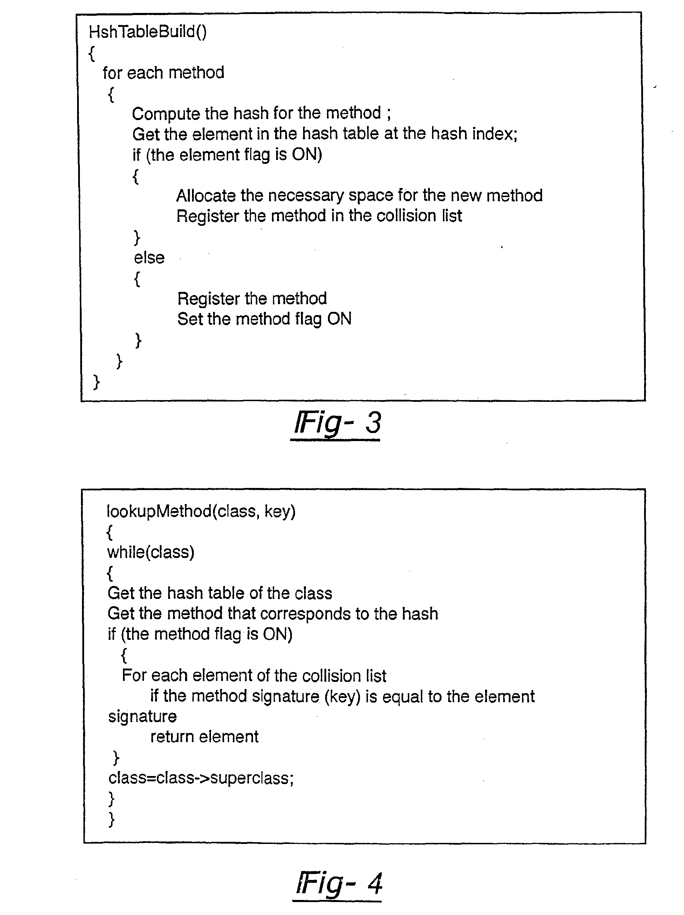

Figure 3 shows an exemplary method hash-table construction procedure. Loader 14 (see Figure 1) can either have an inbuilt hash builder 16 (see Figure 1) to build the hash-table 42(see Figure 2B) or the hash builder 16 may be an external callable routine. Those skilled in the art will understand that the location of the hash building routine, either internal or external to the loader 14, does not limit the invention in any manner. The detailed explanation of building the hash table 42 and working of the hash builder 16 follows.

Hash builder 16 processes the classes loaded by the loader 14. For each method in a given loaded class, the hash builder 16 computes a hash from the method's signature. Using the generated hash, the hash builder 16 gets the element at hash index in the hash table 42. In case a method definition is already present at the accessed hash location, as determined by the flag at that hash index, then a collision entry is created for the new method. But if the flag at that hash index is 'OFF' to indicate absence of any method entry, then the method is registered in the hash table 42 at the calculated hash index.

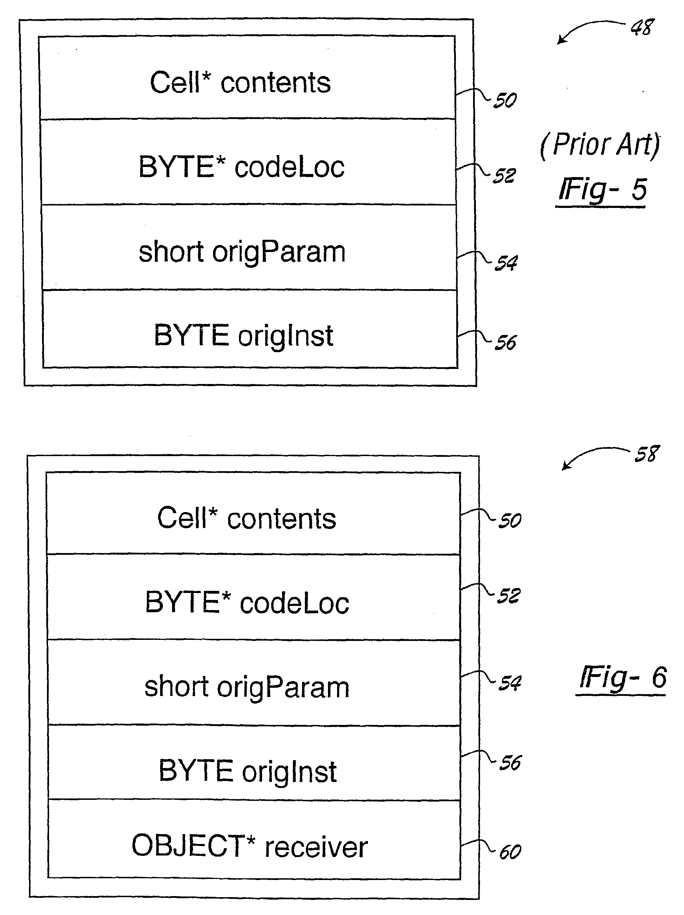

Figure 4 describes an exemplary hash lookup procedure for searching a method in the hash-table. The hash lookup 18 (see Figure 1) uses the hash value obtained from applying a hash function to the method signature for accessing the corresponding entry/index in the hash-table 42 (see Figure 2B). Using the hash value, the hash lookup 18 determines the flag value at the accessed hash index/entry. If the flag associated with this entry is ON (shown as '1' in Figure 2B), it accesses the method definition thanks to the second component of the entry. The OFF-status of the flag (shown as '0' in Figure 2B) indicates that the class does not implement such a method and the search is directed to a super-class.

A hash based method definition access approach provides faster search times as compared a simple table based search. The lookup method acceleration depends on the hash-table size. A larger hash-table size requires a larger memory space but minimizes the collisions. On the other hand, bigger hash-table size can induce an additional cost in terms of memory management (allocation, garbage collection, compaction, etc.).

Those skilled in the art will appreciate that the present invention can be implemented in multiple ways. For example, in an embodiment a virtual machine 10 can be constructed that includes necessary elements of hash-based lookup. Alternatively, a conventional virtual machine can be modified to provide hash-based lookup as described next.

The above described lookup acceleration could be implemented within a conventional embedded Java virtual machine such as KVM (Kilobyte Virtual Machine) follows. The method lookup mechanism in a typical KVM is linear i.e. it uses a sequential access. A hash-based lookup yields better performance over a linear method lookup used in the typical KVM. The implementation of such a mechanism will affect two components of the virtual machine 10 (see Figure 1): the loader 14 and the interpreter 26. The loader is modified to construct the hash tables 42 for each loaded class. The interpreter is modified to take advantage of the hash tables 42 to perform fast and direct-access lookups.

Dynamic techniques consist in caching results of previous lookups. Cache-based techniques eliminate the requirements to create huge dispatch tables, so memory overheads and table creation time are reduced. Global cache technique stores the previous lookup results. In a global cache table, each entry consists of triplets (receiver class, selector and method address). The receiver class and the selector are used to compute an index in the cache. If the current class and the method name match those in the cached entry at the computed index, the code at the method address is executed. Hence, method lookup is avoided. Otherwise, a default dispatching technique (usually DTS) is used and at the end of this search, a new triplet is added to the cache table and control is transferred to the found method. The run-time memory required by this algorithm is small, usually a fixed amount of the cache and the overhead of the DTS technique. A frequent change of the receiver class may slow the execution.

Fig. 5 shows a known cache layout for storing method calls. A cache entry 48 is shown in a representative form and its contents are described next. A contents link 50 is a pointer to the invoked method. A codeLoc 52 is a pointer to the instruction that invoked the method. An original parameter 54 represents the parameters with which the method was originally invoked. An original instruction 56 points to the instruction that was used to invoke the method. In the conventional inline cache technique (such as the one implemented in KVM), only a pointer to the method definition is stored in the cache entry 48. Modified cache entry structure and an cache handling mechanism is described next,

Figure 6 shows an cache entry 58 that includes a link to the receiver. An object on which a method is invoked is called a 'receiver', since it receives a method invocation request from some other object. A receiver pointer 60 points to the receiver. Other members of the cache entry 58 are similar to the above described cache entry 48. The cache entry 58, apart from caching the method invocation details described, also caches a link or pointer to the receiver. When a method is invoked, the class of the receiver is compared to the class of the invoked method. If there is an equality between these two classes, the method definition is retrieved due to the cache entry. If there is no equality, a dynamic lookup is performed to search for the method definition in the class hierarchy. This modification of the cache layout accelerates the method lookup process as described next.

Method calling can be accelerated using a caching approach. An inline cache technique can achieve a significant speed-up of a program execution by using a modified cache layout. The inline cache technique consists in caching the result of the previous lookup (method address) in the code itself at each call site. Inline cache changes the call instruction by overwriting it with a direct invocation of the method found by the default method lookup. Inline cache assumes that the receiver's class changes infrequently, but when it is not the case, the inline cache technique may deliver slow execution time.

The inline cache technique could be significantly improved by avoiding many of the dynamic lookups when there is a mismatch between the class of the receiver and the class of the invoked method. In the event of such a mismatch, if the cache handler 30 can detect that the receiver did not change, we can retrieve the method definition from the cache. This could be done by adding a pointer to the receiver in the cache structure; and modifying the condition that guards cache retrieval.

Addition of the receiver pointer 60 in the cache entry 58 is described above. The guard condition for the cache can be modified to take benefit of the presence of the receiver pointer 60. When a method is invoked, the cache handler 30 checks the guard conditions that are described next.

The first guard condition being that whether the class of the receiver in a given cache entry 58 is equal to the class of the invoked method. The second and alternative guard condition being whether the current receiver is equal to the cached receiver pointed to by the receiver pointer 60, i.e., whether the receiver has not changed. If either of the guard conditions is satisfied, the cache handler 30 retrieves the cache entry 58 to access the method definition without undergoing a lookup or search of the method tables. Those skilled in the art will appreciate that the alternative guard condition that checks if the receiver has not changed makes the cache retrieval process more flexible. This alternative guard condition requires that the receiver pointer 60 be provided in the modified cache entry 58.

An illustration of the cache operation in an embodiment of the present invention is described next. An exemplary pair of classes X and Y (not shown) is considered in the present illustration. Class Y inherits a non-static method m from a Class X. In an OOP program code using Classes X and Y, a loop is present which will be executed very often. In such a loop, the method m is invoked on an object *O*_{*B*}_{,} where *O*_{*B*} is an instance of the class Y. The cache handler 18 will store the receiver pointer 60 pointing to the object *O*_{*B*} after the first invocation of the method m, along with other invocation related entries in the cache entry 58. For subsequent invocations of the method m, the class of the receiver pointer 60, i.e., Class Y, will be different from the class of the invoked method, which will be Class X. The first guard condition, i.e., whether the class of the receiver (Class Y) in the cache entry 58 is equal to the class of the invoked method (Class Y) will fail and no cache retrieval will take place. But the second guard condition, i.e., whether the current receiver is equal to the cached receiver pointed to by the receiver pointer will be satisfied since both point to the same object *O*_{*B*}. Therefore, the second guard condition facilitates a faster lookup of the cached methods calls using the receiver pointer in the cache entry 58.

A comparison of cache techniques in the above described situation shows that the modified cache techniques in the present embodiment provides superior lookup performance. A cache without a receiver pointer 60 (see Fig. 5) will perform a dynamic lookup for each subsequent invocation of the method m resulting in a significant overhead. Such a cache cannot take benefit of the alternative guard condition, where the object pointed to by the receiver pointer 60 is compared to the current object, because of lack of a receiver pointer. On the other hand, the cache handler 30 will simply test if the current receiver equals the one that is pointed to by the receiver pointer 60. Accordingly, the method definition will be retrieved from the cache for all subsequent invocation of the method m without any need for resource expensive lookups. Thus, the cache structure and the cache handling mechanism of the present invention result in a significant speed-up.

Polymorphic inline cache is an extension of the inline cache technique. The compiler generates a call to a special stub routine. Each call site jumps to a specific stub function. The function is initially a call to a method lookup. Each time the method lookup is called, the stub function is extended. This technique has the cost of a test and a direct jump in the best case. Additionally, the executable code could expand dramatically when the class hierarchy is huge and the receiver class changes frequently.

An another embodiment of the present invention implements a synchronized threading model that provides lookup acceleration. An asynchronous single thread program that does not require any outside resources can freely operate without any need for managing the state or activities of concurrently running threads. In a situation where multiple synchronous threads that possibly access same resources and are running at the same time, it becomes imperative to manage the conflicting demands of various threads. Before executing a synchronized method, a thread must acquire the lock associated with the receiver object. This is necessary if two threads are trying to execute this method on the same object. Locking an object slows the execution. A typical threading model that uses an object locking scheme to manage conflicting demands of multiple threads is described below.

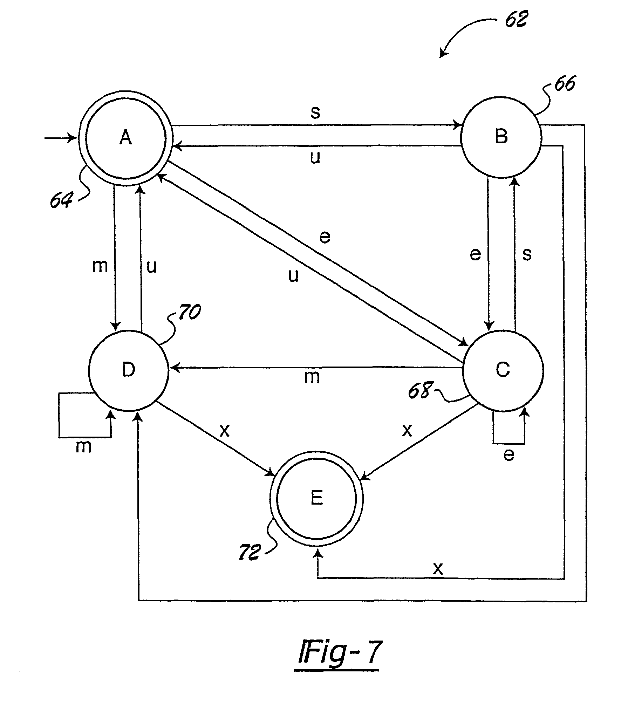

Figure 7 shows a first automation 62 that represents a known threading model. The first automation 62 shows object locking states as circles and the state transitions are shown as directed lines connecting the automation states. First automation 62 consists of states A-E, which indicate the locking status of a given object. State A 64 represents an unlocked state; state B 66 represents a simple locked state; state C 68 represents an extended state; state D 70 represents a monitor state; and state E 72 represents an exception state. The transitions are identified with letters: 'u', 's', 'e', 'm' and 'x'. In particular the letters represent the following operations: u - set_unlocked; s - set_simple_lock; e - set_extended_lock; m - set_monitor; and x - raise_exception.

The interaction of the transition operations is described in context of a given object. Initially the object is in an unlocked State A 64. A set_simple_lock (s) operation is performed when a thread attempts to lock the object for the first time taking the object's locking state changes to simple lock State B 66. Further, when an another thread attempts to lock the same object, which is in the simple locked State B 66, the objects locking state is changed to the extended lock State 'C' 68. The object remains in an extended State C 68 until any other thread tries to lock it further. From any given state, a creation of a monitor state D 70 can happen when a second thread tries to lock an object while another thread owns the lock. A transition from any state to the monitor D 70 state could happen. Exiting from a synchronized method triggers the transition from the monitor State D 70 or the extended State C 68

Transition from any given state to any other state is possible with the sole exclusion of the exception state E 72. An object reaches the exception state E 72 when an exception signal is raised. It is not possible, to exit the exception state E 72 by sending it a transition instruction or command. For all other states, i.e., A-D, transition to any other state or to itself is possible by sending an appropriate transition instruction or signal.

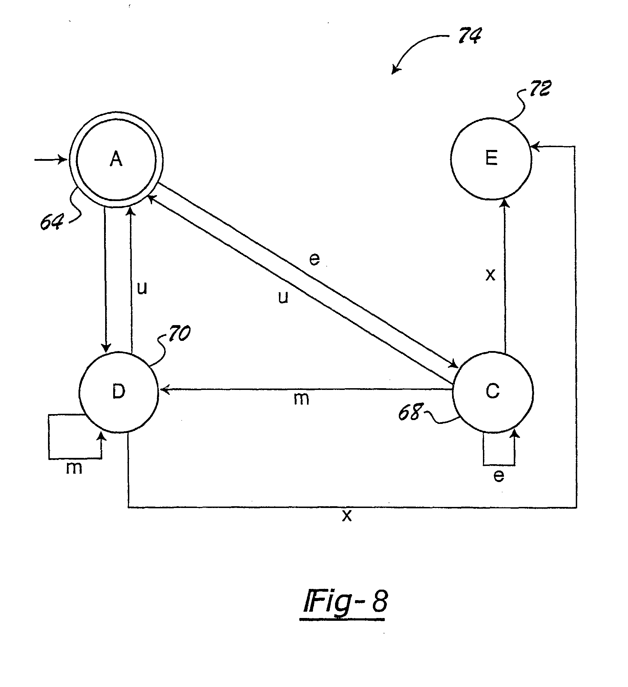

Figure 8 shows an optimized automation for accelerating multithreaded applications. It improves the synchronization technique used in the virtual machine 10 (see Figure 1). By removing the simple locked state B 66 from the automation shown in Figure 7, the threading model avoids transitions from and to the simple locked State B 66, and therefore going directly from the unlocked State A 64 to the extended lock State C 68. A depth indicator (not shown) is used to indicate locking levels as described next.

An object passes from the unlocked state A 64 to the simple lock state B 66 (see Figure 7) when a thread tries to lock it for the first time. In this case, the depth (number of times the object is locked) is set to one. An object passes from the simple lock state B 66 to the extended lock state C 68 as described above. When a thread tries to lock the object for the second time the depth is incremented to two to indicate an transition to the extended lock State C 68. An extended lock State C 68 can be considered a state in which the depth level can be greater or equal to one. Thus, using a depth indicator the need for a simple lock State B 66 can be eliminated.

The elimination of the simple lock state improves thread performance because the execution of some portion of code can be avoided. Further, the transition from the simple lock to the extended lock is avoided making the threading model more efficient.

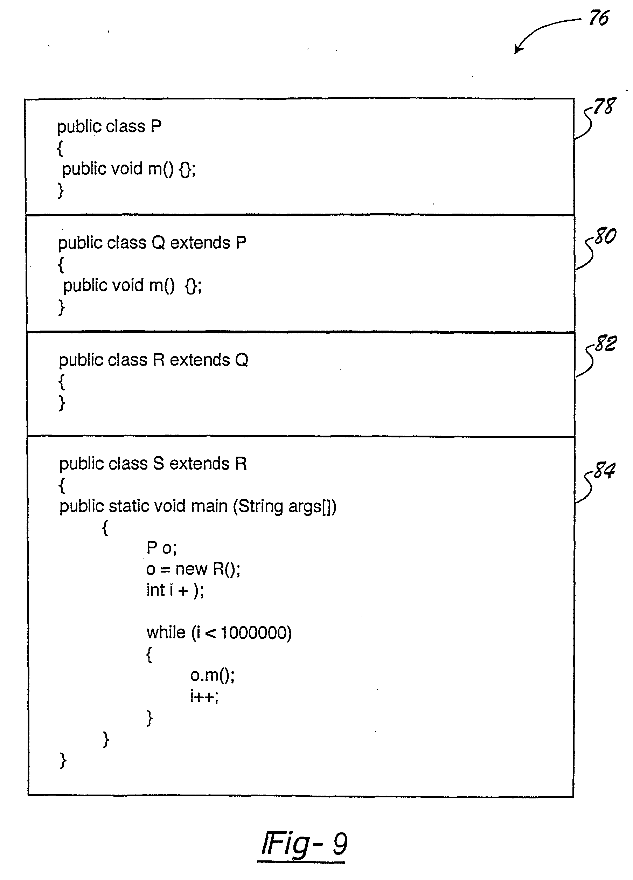

Figure 9 is an exemplary class hierarchy 76 used to illustrate improvements in the calling of inherited methods. Here, the base class is the class P 78. Class Q 80 inherits and extends class P 78. Class Q 80 extends the inherited method m() of the class P 78. Class R 82 extends class Q 80, and Class S 84 further extends Class R 82. A new object 'o' of type S() is instantiated in the main() method of the Class S 84. The inherited method 'm' will be used as an example in further description to illustrate the results of acceleration. Those skilled in the art will appreciate that the above description of the class hierarchy 76 is an example of a typical class hierarchy and the same is not limiting in any manner. Typically, the techniques presented in the present invention have shown to provide up to about 27 percent acceleration in the execution speed of JAVA programs. The above described class hierarchy is profiled in the following description to illustrate typical performance enhancements obtained by applying the principles of the present invention.

Figure 10 shows a bar-chart 86 for comparing call time of the original method call and the optimized method call in an embodiment of the present invention. The original method call 88 is assumed to have been executed under the KVM, while the optimized method call 90 is executed using the virtual machine 10 (see Figure 1) of the present invention. X-axis of the bar-chart 86 represents hash table size 42 (see Figure 2B) and the Y-axis represents execution time. Hash-table 42 size is varied from 11 units to 29 units as shown on the X-axis. The optimized method call 90 shows improved performance across all sizes of hash table 42. As shown on the Y-axis, the optimized method call 90 requires about 500 milliseconds, while the original method call 88 requires about 800 milliseconds for the same method call. Thus, the optimized method call 90 of the present invention provides improved execution times as compared to KVM method calls. Those skilled in the art will understand that the above comparison of method calling times is illustrative and of representative nature, and the same is not limiting in any manner.

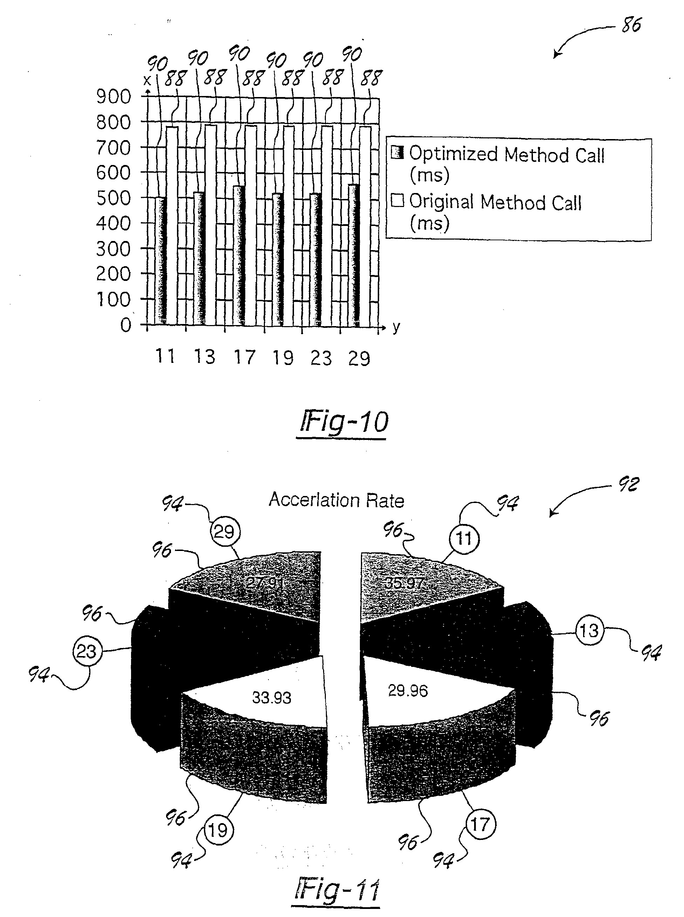

Figure 11 shows a pie-chart 92 showing the acceleration/speedup rates in an embodiment of the present invention. The markers 94 indicate the hash table 42 (see Figure 2B) size and the resulting acceleration is shown as a corresponding pie-slice 96. The pie-chart 92 reflects the application of profiling techniques to the code snippet shown in Figure 9 and described above. The pie-chart 92 shows that better execution times are possible when the hash-table 42's size is optimal. In the present example, the optimal size of the hash-table is about 29 units corresponding to which the execution time is 27.91 units. This can be contrasted with the situation when the hash-table 42's size is 11, the execution time is increased to 35.97. Applying the flexible techniques of the present invention it is possible to choose optimum hash-table 42 size that results in minimum collisions and also requires a reduced memory foot-print. General characteristics of the invention are described next.

The present invention is preferably applied to object oriented systems implemented in embedded systems where the computing resources are limited as compared to a larger systems. The performance enhancement in embedded systems is desirable as the systems are generally real-time. This makes better execution times desirable. Further, the present invention provides flexible methods to optimize the resource requirements of performance enhancing techniques. This is another desirable characteristic in embedded systems, since they have limited memory and processing power. Those skilled in the art will appreciate that the term embedded systems is used in a general manner and the same covers any system that operates under certain resource constraints. For example, systems running JVM in a cell-phone or a wrist-watch based application where the computing resources are of limited nature.

The description of the invention is merely exemplary in nature and, thus, variations that do not depart from the gist of the invention are intended to be within the scope of the invention. Such variations are not to be regarded as a departure from the spirit and scope of the invention.

## Claims

1. A computer based system for accelerating the execution of at least one program, the system comprising:
a virtual machine having a loader and an interpreter, said virtual machine using said loader for loading the program into said virtual machine and using said interpreter for executing said program;
said loader constructing at least one hash-table corresponding to at least one class of the program, said loader constructing said hash-table using at least one hashed method signature of at least one method of said class; and
an interpreter using a hash-table lookup code-arrangement to search for at least one given method belonging to a given class of the program, said hash-table lookup code-arrangement searching said hashed method table for a hash-table entry corresponding to said given method.

2. The system of Claim 1, wherein said hashed method signature is obtained by applying a hash function to a signature of said method of said class.

3. The system of Claim 2, wherein said hash-table comprises:
at least one hash-table index corresponding to said hashed method signature;
at least one method flag; and
at least one pointer to a definition of said method of said class.

4. The system of Claim 3, wherein said hash-table further comprises:
a collision list for handling multiple hashed method signatures corresponding to a common said index of said hash-table.

5. The system of Claim 4, wherein said loader includes a collision handler to update said collision list.

6. The system of Claim 5, wherein said collision handler being optimized to handle collision situations wherein multiple hashed method signatures correspond to a common said index of said hash-table.

7. The system of Claim 6, wherein said hash-table lookup code-arrangement searching said collision list of said class when said hash-table lookup code-arrangement being unable to locate said hash-table entry corresponding to said given method,

8. The system of Claim 7, wherein said hash-table lookup code-arrangement searching a super-class of said class when said hash-table lookup code-arrangement being unable to locate said hash-table entry corresponding to said given method in said collision list, wherein said class being related to said super-class.

9. The system of Claim 1, wherein said virtual machine is a Kilobyte Virtual Machine (KVM) operating in a memory associated with an electronic device and said interpreter being a bytecode interpreter.

10. The system of Claim 1, wherein said virtual machine is a JAVA virtual machine (JVM).

11. The system of Claim 1, wherein said hash-table requiring an optimum memory size.

12. A computer based system for accelerating the execution of at least one program, the system comprising:
a virtual machine having an interpreter, said interpreter operating on a first receiver object;
a cache associated with said interpreter, said cache including at least one stored cache entry, said cache entry storing at least one first link to a second receiver object and a second link to a method; and
said interpreter utilizing said entry in said cache to directly accessing said method through said second link when said first receiver object matches with said second receiver object accessed through said first link stored in said cache entry.

13. The system of Claim 12, wherein said interpreter performing a lookup a method table to search for said method when said first receiver object fails to match with said second receiver object accessed through said first link stored in said cache entry.

14. The system of Claim 12, wherein said interpreter comprising:
a cache handling module for matching said first receiver object to said second receiver object.

15. The system of Claim 14, wherein said cache handling module directly accessing said method through said second link when a first class matches with a second class said second receiver object accessed through said first link stored in said cache entry, said first receiver object being an instance of said first class.

16. A computer based system for accelerating the execution of at least one program, the system comprising:
a virtual machine having a threading model to execute the program having at least one class, said class having at least one object;
at least two threads of said threading model operating on the object, said threading model controlling the locking of said object using a depth level to control access to said object by said threads, wherein said depth level having at least two different locking states.

17. The system of Claim 16, wherein a first depth level represents a simple locked state.

18. The system of Claim 17, wherein said second depth level represents an extended locked state.

19. The system of Claim 18, wherein a change in said depth level providing a transition between said simple locked state and said extended locked state.

20. A computer based virtual machine executing a program, the program having at least one class, the class having at least one method, the virtual machine comprising:
a loader using a hash-table and a hash-table lookup code-arrangement for searching the method operating on an object of the class;
an interpreter for executing the method loaded by said loader, a cache being associated with said interpreter, said cache being composed of at least one cache entry, said cache entry including at least one link to the object; and
a threading model being used by said interpreter, at least two threads of said threading model operating on the object, said threading model controlling the locking of the object using a depth level, wherein a change in depth level providing a transition between at least two different locking states.

21. A computer based method for accelerating the execution of at least one program, the method comprising:
loading the program into a virtual machine using a loader;
constructing at least one hash-table corresponding to at least one class of the program;
using at least one hashed method signature of at least one method of said class for constructing said hash-table; and
interpreting the loaded said program using a hash-table lookup code-arrangement to search for at least one given method belonging to a given class of the program.

22. The method of Claim 21, wherein the step of constructing further comprising:
applying a hash function to a signature of said method of said class to obtain at least one hashed method signature.

23. The method of Claim 21, wherein the step of interpreting further comprising:
searching said hashed method table for a hash-table entry corresponding to said given method.

24. The method of Claim 21, wherein the step of constructing further comprising:
creating a collision list for handling multiple hashed method signatures corresponding to a common index of said hash-table.

25. The method of Claim 24 wherein the step of interpreting further comprising:
searching said collision list of said class when said hash-table lookup code-arrangement being unable to locate an entry in said hash-table corresponding to said given method,

26. The method of Claim 25, further comprising:
optimizing the searching to said collision list.

27. The method of Claim 25, further comprising:
searching a super-class of said class when said hash-table lookup code-arrangement being unable to locate said hash-table entry corresponding to said given method in said collision list, wherein said class being related to said super-class.

28. The method of Claim 21, further comprising:
optimizing the size of said hash-table and .

29. A computer based method for accelerating the execution of at least one program, the method comprising:
processing a method call by a virtual machine, said virtual machine operating on a first receiver object;
storing at least one first link to a second receiver object and at least one second link to a method;
matching said first receiver object with said second receiver object; and
accessing said method directly through said second link when the match between said first receiver object and said second receiver object is successful.

30. The method of Claim 29, further comprising:
performing a lookup in a method table to search for said method when said first receiver object fails to match with said second receiver object accessed through said first link stored in said cache entry.

31. A computer based method for accelerating the execution of at least one program, the system comprising:
providing a threading model in a virtual machine having to execute the program having at least one class, said class having at least one object;
controlling the locking of said object by said threading model using a depth level to control access to said object by at least two threads of said threading model, wherein said depth level having at least two different locking states.

32. The method of Claim 31 further comprising:
representing a simple locked state with a first depth level.

33. The system of Claim 32 further comprising:
representing an extended locked state with a said second depth level.

34. The method of Claim 33 further comprising;
providing a transition between said simple locked state and said extended locked state with a change in said depth level.
